# EUROPÄISCHE PATENTSCHRIFT

(11) **EP 3 297 848 B1**
(45) Veröffentlichungstag und Bekanntmachung des Hinweises auf die Patenterteilung: **30.10.2019**
(21) Anmeldenummer: 16702151.8
(22) Anmeldetag: 02.02.2016
(51) Int. Cl.: B60C 5/14, B60C 17/00

(54) **FAHRZEUGLUFTREIFEN MIT NOTLAUFEIGENSCHAFTEN**
PNEUMATIC VEHICLE TIRE WITH RUN-FLAT PROPERTIES
PNEUMATIQUE DE VÉHICULE DOTÉ DE PROPRIÉTÉS DE FONCTIONNEMENT EN CAS D'URGENCE

(30) Priorität: 18.05.2015 DE 102015209061
(43) Veröffentlichungstag der Anmeldung: 28.03.2018
(73) Patentinhaber: Continental Reifen Deutschland GmbH, 30165 Hannover (DE)
(72) Erfinder: HABICHT, Stefan, 30449 Hannover (DE); FUNK-FRIEDEK, Sascha, 30449 Hannover (DE)
(74) Vertreter: Finger, Karsten
(86) Internationale Anmeldenummer: PCT/EP2016/052108
(87) Internationale Veröffentlichungsnummer: WO 2016/184580

(56) Entgegenhaltungen:
- EP-A1- 1 970 221
- EP-A1- 2 700 513
- EP-A1- 2 808 177
- EP-A2- 2 853 419

## Beschreibung

Die Erfindung betrifft einen Fahrzeugluftreifen mit Notlaufeigenschaften, aufweisend einen Laufstreifen, einen mehrlagigen Gürtelverband, eine luftdicht ausgeführte Innenschicht, eine Karkasse, welche im Wulstbereich von axial innen nach axial außen um zugfeste Kerne als Karkasshochschlag herumgeführt ist und Seitenwände, innerhalb derer mindestens ein im Querschnitt mondsichelförmiges, über den Umfang der Seitenwand ringförmig geschlossenes Verstärkungsprofil angeordnet ist, wobei die Innenschicht nicht durchgängig von Wulstbereich zu Wulstbereich den Reifenquerschnitt durchläuft, sondern wobei innerhalb der Querschnittshöhe des Verstärkungsprofils auf die Innenschicht verzichtet ist und wobei die Innenschicht in einem gegenüber dem Laufstreifen liegenden Bereich zwischen den beiden oberen Enden der Verstärkungsprofile angeordnet ist.

Ein derartiger Fahrzeugluftreifen mit Notlaufeigenschaften ist aus der DE 10 2007 012 401 A1 bekannt. Die Innenschicht ist innerhalb der Querschnittshöhe des Verstärkungsprofils weggelassen. Durch die daraus resultierende Materialeinsparung ist an Kosten und an Gewicht eingespart, weil für die nicht geschlossen im Reifenhohlraum angeordnete Innenschicht weniger Butylkautschuk im Reifen eingesetzt ist. Die Luftdichtigkeit des Reifens ist dennoch gegeben. Das unterhalb des Laufstreifens angeordnete ringförmig über den Umfang umlaufende Innenschicht-Band überlappt die oberen Enden der beiden Verstärkungsprofile axial innen (liegt also innen auf den oberen beiden Enden auf).

Im Pannenfall selbstragende Fahrzeugluftreifen sind in verschiedenen Ausführungsformen hinreichend bekannt. Die im Bereich der Seitenwände des Reifens eingebrachten Verstärkungsprofile werden bezüglich ihrer Querschnittsform und ihrer elastomeren Mischungen derart ausgeführt, dass sie in der Lage sind, den Reifen bei einem Druckluftverlust im Pannenfall selbstragend zu erhalten, so dass eine Weiterfahrt über eine gewisse Laufstrecke ermöglicht ist. Diese Notlaufreifenkonstruktion ist als SSR-Reifen (Self Supporting RunFlat Tire) bekannt.

Jedoch kann sich insbesondere im Notlaufbetrieb des Notlaufreifens des Standes der Technik die Innenschicht, ausgehend von ihren frei liegenden Enden, lösen, wodurch der Reifen luftundicht werden kann.

Es ist die Aufgabe der vorliegenden Erfindung, einen Notlaufreifen bereitzustellen, der im normalen Fahrbetrieb ein geringes Gewicht aufweist, der kostengünstig in seiner Herstellung ist und der zudem über seine Lebensdauer luftdicht ist.

Die Aufgabe wird dadurch gelöst, dass die Innenschicht diese beiden Enden der Verstärkungsprofile nicht axial innen überdeckt.

Erfindungsgemäß überdeckt der gegenüber dem Laufstreifen liegende Innenschichtstreifen die Verstärkungsprofile nicht axial innen. Es liegen demnach keine Innenschichtkanten frei auf dem Verstärkungsprofil auf. Daher ist die Gefahr, dass sich dieses Innenschichtkanten im Fahrbetrieb des Reifens ablösen, nicht gegeben. Der Luftreifen mit Notlaufeigenschaften ist über seine Lebensdauer luftdicht. Zudem weist der Reifen, wie im nächstliegenden Stand der Technik ebenfalls bekannt, ein geringes Gewicht auf und ist in seiner Herstellung kostengünstig.

"Oberes Ende des Verstärkungsprofils" meint das Ende des Verstärkungsprofils, welches dem Laufstreifen zugewandt ist.

"Unteres Ende des Verstärkungsprofils" meint das Ende des Verstärkungsprofils, welches dem Laufstreifen abgewandt ist.

Zweckmäßig ist es, wenn die Innenschicht zwischen den beiden oberen Enden der Verstärkungsprofile angeordnet ist und wenn die Innenschicht auf Stoß an diesen beiden oberen Enden der Verstärkungsprofile endet. Es ist an Innenschichtmaterial eingespart, wodurch der Luftreifen noch kostengünstiger zu erhalten ist.

In einer anderen Ausführung der Erfindung ist die Innenschicht zwischen den beiden oberen Enden der Verstärkungsprofile angeordnet und die Innenschicht ist axial außen an den dem Laufstreifen zugewandten Enden entlang geführt, wobei die Innenschicht diese oberen Enden konturparallel zwischen 5 mm und 15 mm überdeckt. Die Kanten der Innenschicht sind zwischen Verstärkungsprofil und Karkasse geklemmt und liegen nicht frei, wodurch die Kanten der Innenschicht besonders haltbar und gegen Ablösung im Fahrbetrieb gesichert angeordnet sind.

Vorteilhaft zur Sicherstellung der Luftdichtigkeit ist es, wenn im Wulstbereich ein weiterer ringkreisförmig über den Reifenumfang umlaufender Innenschichtstreifen angeordnet ist, welcher auf der Höhe des Wulstkernes angeordnet ist und der das untere Ende des Verstärkungsprofils axial innen oder axial außen konturparallel zwischen 5 mm und 15 mm überdeckt.

Dabei ist es vorteilhaft, wenn im innenschichtlosen Bereich zwischen den Innenschichtstreifen ein Gummistreifen angeordnet ist, welcher aus einer Kautschukmischung besteht, welche keine Butylkautschukmischungen ist. Der Gummistreifen ist somit axial innen in Bezug auf das Verstärkungsprofil angeordnet.

Zweckmäßig ist es, wenn die Karkasse einlagig ausgeführt ist und wenn das Verstärkungsprofil axial innen in Bezug auf die Karkasse angeordnet ist. Hierdurch ist eine vom Gewicht her geringere, aber stabile Reifenkonstruktion erhalten.

Möglich sind jedoch verschiedenste Karkasskonstruktionen, wie beispielsweise eine zweilagige Karkasskonstruktion, eine sogenannte C-Lagenkonstruktion oder eine sogenannte Winkelkarkasse mit Festigkeitsträgern, welche einen Winkel von 90° +/- 18° mit der Umfangsrichtung einschließen.

Weitere Merkmale, Vorteile und Einzelheiten der Erfindung werden anhand der einzigen Zeichnungen, die ein schematisches Ausführungsbeispiel darstellt, näher erläutert.

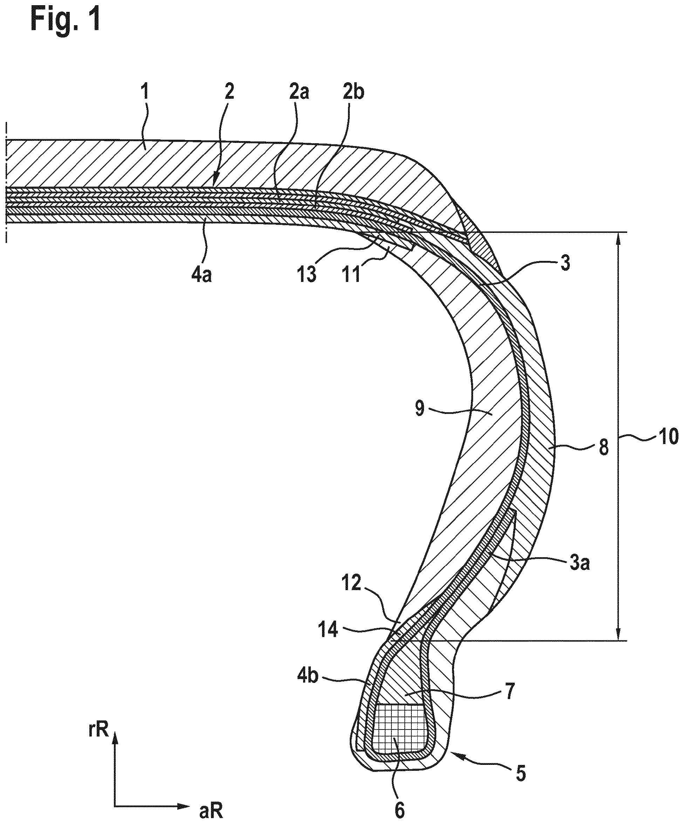

Die Fig.1 zeigt einen hälftigen Querschnitt durch einen Radialluftreifen für Personenkraftwagen mit Notlaufeigenschaften durch verstärkte Seitenwände. Die wesentlichen Bestandteile, aus welchen sich der dargestellte Radialreifen zusammensetzt, sind: ein Laufstreifen 1, ein bei der gezeigten Ausführung aus zwei Lagen 2a, 2b bestehender Gürtel 2, eine einlagig ausgeführte Karkasse 3, eine luftdicht ausgeführte, mehrteilige Innenschicht 4a, 4b, Wülste 5 mit Wulstkernen 6 und Wulstkernprofilen 7, sowie Seitenwände 8 und etwa mondsichelförmige, aus elastomerem Material, insbesondere aus einer Kautschukmischung, hergestellte Verstärkungsprofile 9. Die Verstärkungsprofile sind axial innen in Bezug auf die Karkasse 3 angeordnet. Die beiden Lagen 2a, 2b des Gürtels 2 bestehen aus in eine Gummimischung eingebetteten Festigkeitsträgern aus Stahlcord, welche innerhalb jeder Lage parallel zueinander verlaufen, wobei die Stahlcorde der einen Lage 2a in kreuzender Anordnung zu den Stahlcorden der zweiten Lage 2b orientiert sind und mit der Reifenumfangsrichtung jeweils einen Winkel zwischen 20° und 38° einschließen. Auch die Karkasse 3 kann in herkömmlicher und bekannter Weise ausgeführt sein und somit in eine Gummimischung eingebettete, in radialer Richtung verlaufende Verstärkungsfäden aus einem textilen Material aufweisen. Die Karkasse 3 ist um die Wulstkerne 6 von axial innen nach axial außen geführt, ihre Hochschläge 3a verlaufen neben den Wulstkernprofilen 7 in Richtung Gürtel 2. Die Dicke des Verstärkungsprofils 9 nimmt sowohl Richtung Gürtel 2 als auch Richtung Wulst 5 ab. Richtung Gürtel 2 reicht das Verstärkungsprofil 9 bis unter die Randbereiche desselben. Richtung Wulst 5 endet das Verstärkungsprofil 9 auf einer Höhe, die in einem Bereich von Wulstkernprofil 7 bis Wulstkern 6 liegt. Über den überwiegenden Bereich der Länge der Seitenwand ist das Verstärkungsprofil 9 nahezu konstant dick ausgeführt, seine Stärke beträgt 4 bis 15mm.

In diesem Teilquerschnitt eines symmetrisch aufgebauten Radialluftreifens durchläuft die aus BR-Kautschuk bestehende Innenschicht 4 den Reifeninnenraum nicht von Wulstbereich 5 zu Wulstbereich 5 durchgängig, sondern es ist innerhalb der Querschnittshöhe 10 des Verstärkungsprofils auf die Innenschicht 4 verzichtet. Die Innenschicht 4 besteht aus zwei einander nicht berührenden Innenschichten 4a, 4b.

Die Innenschicht 4a ist in einem gegenüber dem Laufstreifen 1 liegenden Bereich zwischen den beiden oberen Enden 11 der Verstärkungsprofile 9 angeordnet, wobei die Innenschicht 4a diese beiden Enden 11 der Verstärkungsprofile 9 nicht axial innen überdeckt, sondern die Innenschicht 4a ist axial außen an den oberen Enden 11 entlanggeführt. Somit liegt die Kante der Innenschicht 4a nicht frei, sondern ist zwischen Verstärkungsprofil 9 und Karkasse 3 gegen Ablösung durch Klemmung gesichert angeordnet. Die Überdeckung 13 des Verstärkungsprofils 9 durch die Innenschicht 4a erfolgt konturparallel über eine Länge zwischen 5 mm und 15 mm.

Im Wulstbereich 5 ist ein weiterer ringkreisförmig über den Reifenumfang umlaufender Innenschichtstreifen 4b auf Höhe des Wulstprofiles 7 angeordnet. Das untere Ende 12 des Verstärkungsprofils 9 ist axial außen von der Innenschicht 4b überdeckt und ist ablösesicher zwischen Verstärkungsprofil und Karkasse geklemmt angeordnet. Die Überdeckung 14 dieses Enden 12 erfolgt konturparallel über eine Länge zwischen 5 mm und 15 mm.

### Bezugszeichenliste

- 1: Laufstreifen
- 2: Gürtel
- 2a,b: Gürtellage
- 3: Karkasse
- 3a: Karkasshochschlag
- 4a: Innenschicht
- 4b: Innenschichtstreifen
- 5: Wulstbereich
- 6: Wulstkern
- 7: Wulstkernprofil
- 8: Seitenwand
- 9: Verstärkungsprofil
- 10: Querschnittshöhe des Verstärkungsprofils
- 11: Oberes Ende des Verstärkungsprofils
- 12: Unteres Ende des Verstärkungsprofils
- 13: Überdeckung
- 14: Überdeckung
- aR: axiale Richtung
- rR: radiale Richtung

## Patentansprüche

1. Fahrzeugluftreifen mit Notlaufeigenschaften,
aufweisend einen Laufstreifen (1), einen mehrlagigen Gürtelverband (2), eine luftdicht ausgeführte Innenschicht (4), eine Karkasse (3), welche im Wulstbereich (5) von axial innen nach axial außen um zugfeste Kerne (6) als Karkasshochschlag (3a) herumgeführt ist und Seitenwände (8), innerhalb derer mindestens ein im Querschnitt mondsichelförmiges, über den Umfang der Seitenwand ringförmig geschlossenes Verstärkungsprofil (9) angeordnet ist, wobei die Innenschicht (4) nicht durchgängig von Wulstbereich (5) zu Wulstbereich (5) den Reifenquerschnitt durchläuft, sondern wobei innerhalb der Querschnittshöhe (10) des Verstärkungsprofils (9) auf die Innenschicht verzichtet ist und wobei die Innenschicht (4a) in einem gegenüber dem Laufstreifen (1) liegenden Bereich zwischen den beiden oberen Enden (11) der Verstärkungsprofile (9) angeordnet ist
**dadurch gekennzeichnet,**
**dass** die Innenschicht (4a) diese beiden Enden (11) der Verstärkungsprofile (9) nicht axial innen überdeckt.

2. Fahrzeugluftreifen nach Anspruch 1, **dadurch gekennzeichnet, dass** die Innenschicht (4a) zwischen den beiden Enden (11) der Verstärkungsprofile (9) angeordnet ist und dass die Innenschicht (4a) auf Stoß an diesen beiden Enden (11) der Verstärkungsprofile (9) endet.

3. Fahrzeugluftreifen nach einem oder mehreren der vorangehenden Ansprüche, **dadurch gekennzeichnet, dass** die Innenschicht (4a) zwischen den beiden oberen Enden (11) der Verstärkungsprofile (9) angeordnet ist und dass die Innenschicht (4a) axial außen an den oberen Enden (11) entlang geführt ist und eine konturparallele Überdeckung (13) dieser Enden (11) zwischen 5 mm und 15 mm aufweist.

4. Fahrzeugluftreifen nach einem oder mehreren der vorangehenden Ansprüche, **dadurch gekennzeichnet, dass** die Karkasse (3) einlagig ausgeführt ist und dass das Verstärkungsprofil (9) axial innen in Bezug auf die Karkasse (3) angeordnet ist.

5. Fahrzeugluftreifen nach einem oder mehreren der vorangehenden Ansprüche, **dadurch gekennzeichnet, dass** im Wulstbereich (5) ein weiterer ringkreisförmig über den Reifenumfang umlaufender Innenschichtstreifen (4b) auf der Höhe des Wulstprofiles (7) angeordnet ist und dass der Innenschichtstreifen (4b) axial außen oder axial innen an dem unteren Ende (12) entlang geführt ist und eine konturparallele Überdeckung (14) des unteren Endes (12) zwischen 5 mm und 15 mm aufweist.

6. Fahrzeugluftreifen nach Anspruch 5, **dadurch gekennzeichnet, dass** im innenschichtlosen Bereich zwischen den Innenschichtstreifen (4a, 4b) ein Gummistreifen angeordnet ist, welcher aus einer Kautschukmischung besteht, welche keine Butylkautschukmischungen ist.

## Claims

1. Pneumatic vehicle tyre with run-flat properties, having a tread (1), a multi-ply breaker belt assembly (2), an inner layer (4) of an airtight form, a carcass (3), which in the bead region (5) is led from axially the inside axially outwards around tension-resistant cores (6) as a carcass turn-up (3a), and sidewalls (8), within which there is arranged at least one reinforcing profile (9), which is of a sickle-shaped cross section and is of a continuous ring-shaped form over the circumference of the sidewall, the inner layer (4) not running right through the cross section of the tyre from bead region (5) to bead region (5), but it rather being the case that the inner layer is omitted within the cross-sectional height (10) of the reinforcing profile (9) and the inner layer (4a) in a region lying opposite the tread (1) being arranged between the two upper ends (11) of the reinforcing profiles (9),
**characterized**
**in that** the inner layer (4a) does not cover these two ends (11) of the reinforcing profiles (9) axially on the inside.

2. Pneumatic vehicle tyre according to Claim 1, **characterized in that** the inner layer (4a) is arranged between the two ends (11) of the reinforcing profiles (9) and **in that** the inner layer (4a) ends in abutment with these two ends (11) of the reinforcing profiles (9).

3. Pneumatic vehicle tyre according to one or more of the preceding claims, **characterized in that** the inner layer (4a) is arranged between the two upper ends (11) of the reinforcing profiles (9) and **in that** the inner layer (4a) is led axially outwards along the upper ends (11) and has a contour-parallel covering (13) of these ends (11) of between 5 mm and 15 mm.

4. Pneumatic vehicle tyre according to one or more of the preceding claims, **characterized in that** the carcass (3) is of a single-ply form and **in that** the reinforcing profile (9) is arranged axially on the inside with respect to the carcass (3).

5. Pneumatic vehicle tyre according to one or more of the preceding claims, **characterized in that** in the bead region (5) a further inner-layer strip (4b) that runs around the circumference of the tyre in a circular ring-shaped manner is arranged at the height of the bead filler (7) and **in that** the inner-layer strip (4b) is led axially outwards or axially inwards along the lower end (12) and has a contour-parallel covering (14) of the lower end (12) of between 5 mm and 15 mm.

6. Pneumatic vehicle tyre according to Claim 5, **characterized in that** a rubber strip which consists of a rubber compound that does not comprise any butyl rubber compounds is arranged in the region without an inner layer between the inner-layer strips (4a, 4b).

## Revendications

1. Pneumatique de véhicule doté de propriétés de fonctionnement en cas d'urgence,
présentant une bande de roulement (1), une nappe d'armature (2) multicouche, une couche interne (4) réalisée de manière étanche à l'air, une carcasse (3) qui est guidée dans la région du talon (5) axialement de l'intérieur vers l'extérieur autour de tringles résistant à la traction (6) en tant que revers de carcasse (3a) et des parois latérales (8) à l'intérieur desquelles est disposé au moins un profilé de renforcement (9) fermé sous forme annulaire sur la périphérie de la paroi latérale, de section transversale en forme de croissant de lune, la couche interne (4) ne s'étendant pas en continu depuis la région du talon (5) jusqu'à la région du talon (5) sur la section transversale du pneu, mais la couche interne étant absente à l'intérieur de la hauteur en section transversale (10) du profilé de renforcement (9) et la couche interne (4a) étant disposée dans une région située en face de la bande de roulement (1) entre les deux extrémités supérieures (11) des profilés de renforcement (9),
**caractérisé en ce que**
la couche interne (4a) ne recouvre pas axialement à l'intérieur ces deux extrémités (11) des profilés de renforcement (9).

2. Pneumatique de véhicule selon la revendication 1, **caractérisé en ce que** la couche interne (4a) est disposée entre les deux extrémités (11) des profilés de renforcement (9) et **en ce que** la couche interne (4a) se termine en aboutement au niveau de ces deux extrémités (11) des profilés de renforcement (9).

3. Pneumatique de véhicule selon l'une quelconque ou plusieurs des revendications précédentes, **caractérisé en ce que** la couche interne (4a) est disposée entre les deux extrémités supérieures (11) des profilés de renforcement (9) et **en ce que** la couche interne (4a) est guidée axialement à l'extérieur le long des extrémités supérieures (11) et présente un recouvrement de contour parallèle (13) de ces extrémités (11) entre 5 mm et 15 mm.

4. Pneumatique de véhicule selon l'une quelconque ou plusieurs des revendications précédentes, **caractérisé en ce que** la carcasse (3) est réalisée avec une seule couche et **en ce que** le profilé de renforcement (9) est disposé axialement à l'intérieur par rapport à la carcasse (3).

5. Pnuematique de véhicule selon l'une quelconque ou plusieurs des revendications précédentes, **caractérisé en ce que** dans la région du talon (5), une bande de couche interne (4b) de forme annulaire circulaire supplémentaire s'étendant sur la périphérie du pneu est disposée à la hauteur du profilé de talon (7) et **en ce que** la bande de couche interne (4b) est guidée axialement à l'extérieur ou axialement à l'intérieur le long de l'extrémité inférieure (12) et présente un recouvrement de contour parallèle (14) de l'extrémité inférieure (12) entre 5 mm et 15 mm.

6. Pneumatique de véhicule selon la revendication 5, **caractérisé en ce que** dans la région sans couche interne entre les bandes de couche interne (4a, 4b) est disposée une bande de caoutchouc qui se compose d'un mélange de caoutchouc qui n'est pas des mélanges de caoutchouc butyle.
